# EUROPEAN PATENT APPLICATION

(11) **EP 4 366 063 A1**
(43) Date of publication of application: **08.05.2024**
(21) Application number: 23812147.9
(22) Date of filing: 24.05.2023
(51) Int. Cl.: H01M 50/308, H01M 50/35, H01M 50/325, H01M 50/512, H01M 50/249, H01M 50/24

(54) **BATTERY PACK AND DEVICE INCLUDING SAME**

(30) Priority: 27.05.2022 KR 20220065587; 23.05.2023 KR 20230066280
(71) Applicant: LG ENERGY SOLUTION, LTD., Seoul 07335 (KR)
(72) Inventor: KIM, Seung Joon, Daejeon 34122 (KR); KIM, Kyungwoo, Daejeon 34122 (KR); HWANG, Ji Soo, Daejeon 34122 (KR); KANG, Jongmo, Daejeon 34122 (KR)
(74) Representative: Plasseraud IP
(86) International application number: PCT/KR2023/007088
(87) International publication number: WO 2023/229373

(57) **Abstract**

A battery pack according to one embodiment of the present disclosure includes a plurality of battery modules; a pack frame that houses the plurality of battery modules; end plates that cover the open front and rear surfaces of a battery cell stack; and a blocking member located between the pack frame and the end plate, wherein the blocking member comprises a frame member; an opening formed in the frame member; and a blocking plate that covers the opening, and wherein the blocking plate moves in a specific direction to open and close the opening.

## Description

### [TECHNICAL FIELD]

### Cross Citation with Related Application(s)

This application claims the benefits of Korean Patent Application No. 1 0-2022-0065587 filed on May 27, 2022 and Korean Patent Application No. 1 0-2023-0066280 filed on May 23, 2023 in the Korean Intellectual Property Office, the disclosures of which are incorporated herein by reference in their entirety.

The present disclosure relates to a battery pack and a device including the same, and more particularly, to a battery pack with improved safety, and a device including the same.

### [BACKGROUND]

As technology development and demands for mobile devices increase, the demand for batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Meanwhile, recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series and/or in parallel.

Further, when a plurality of battery cells are connected in series/parallel to configure a battery pack, it is common to configure a battery module composed of at least one battery cell first and then configure a battery pack by using at least one battery module and adding other components.

Generally, when a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

At this time, when thermal runaway occurs in the battery cells, battery modules, and battery packs, flames are generated, and there is a high possibility of fires due to venting gas or flames generated from battery cells. In particular, when a thermal runaway phenomenon occurs in one battery module, propagation to adjacent battery modules becomes very fast. In addition, there is a high possibility of large-scale fire and explosion due to thermal runaway propagation between the battery module and the battery pack.

Therefore, there is a need for a structure that can prevent and suppress thermal runaway and thermal runaway propagation phenomena, and particularly, there is a need to secure the safety of the battery pack through a structure capable of blocking venting gas and flame at one battery module undergoing thermal runaway from transferring to adjacent battery modules.

### [DETAILED DESCRIPTION OF THE INVENTION]

### [Technical Problem]

It is an object of the present disclosure to provide a battery pack with improved safety, and a device including the same.

The objects of the present disclosure are not limited to the foregoing objects, and any other objects and advantages not mentioned herein should be clearly understood by those skilled in the art from the following description and the accompanying drawing.

### [Technical Solution]

According to one embodiment of the present disclosure, there is provided a battery pack comprising: a plurality of battery modules; a pack frame that houses the plurality of battery modules; end plates that cover the open front and rear surfaces of a battery cell stack; and a blocking member located between the pack frame and the end plate, wherein the blocking member comprises a frame member; an opening formed in the frame member; and a blocking plate that covers the opening, and wherein the blocking plate moves in a specific direction to open and close the opening.

The blocking member further comprises a mesh structure located in the opening, and the blocking plate may cover the mesh structure.

The blocking member further comprises a plurality of fixing members, wherein the fixing member comprises one end that protrudes from the frame member, and the other end that extends perpendicularly from the one end in a direction away from the frame member.

The other end may be located to couple with the pack frame.

The blocking plate may move from one end of the fixing member toward the other end of the fixing member under a certain pressure or higher.

The fixing member comprises an elastic member, and the blocking plate is movable along a direction in which the elastic member extends.

The plurality of battery modules are arranged in parallel, and the blocking member is arranged side by side in one direction along the end plates of the plurality of battery modules.

When thermal runaway occurs, the blocking plate moves by the venting gas inside the battery module, the opening is connected to the outside as the blocking plate moves, and the venting gas may be discharged through the opening.

The blocking member according to another embodiment of the present disclosure may further comprise a plurality of protrusions formed on the frame member.

The protrusion may be in contact with the outer side of the end plate. The protrusion may fix the blocking member on the end plate.

The battery pack according to the present embodiment further comprises a partition wall located in the inner space of the pack frame, wherein the partition wall may separate the plurality of battery modules from each other.

The pack frame shields the upper and lower parts of the battery module, and the partition wall may shield a side surface of the battery module to seal the battery module.

The frame member includes a plurality of holes, and a coupling member may be inserted into the hole to couple and fix the frame member to the partition wall.

According to one embodiment of the present disclosure, there is provided a device comprising the above-mentioned battery pack.

### [Advantageous Effects]

A battery pack according to an embodiment of the present disclosure includes a blocking member, wherein the blocking member includes a blocking plate, and the blocking plate is opened so that venting gas is discharged from one battery module undergoing thermal runaway, thereby quickly suppressing thermal runaway of the battery module.

In addition, the blocking member and the blocking plate of the present disclosure are formed to shield a battery module not undergoing thermal runaway, thereby protecting adjacent battery modules from venting gas and flame discharged from one battery module undergoing thermal runaway, thereby preventing and suppressing propagation of thermal runaway and minimizing damage to adjacent battery modules.

Further, the battery pack of the present disclosure minimizes thermal runaway by the above configuration, thereby improving safety and protecting the user.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a top view of a battery pack according to an embodiment of the present disclosure as viewed from above;
FIG. 2 is a perspective view of a battery module included in a battery pack according to an embodiment of the present disclosure as viewed from above;
FIG. 3 is a top view of a battery pack according to another embodiment of the present disclosure as viewed from above;
FIG. 4 is a perspective view showing a blocking member included in a battery pack according to an embodiment of the present disclosure;
FIG. 5 is a perspective view showing a blocking member in which the blocking plate of FIG. 4 is moved and opened;
FIG. 6 is a perspective view showing a blocking member of another embodiment included in a battery pack according to an embodiment of the present disclosure;
FIG. 7 is a perspective view of the blocking member of FIG. 6 viewed from another side;
FIG. 8 is a side view of the blocking member of FIG. 4, which is a side view showing the blocking member in which the blocking plate is not moved and thus closed; and
FIG. 9 is a side view of the blocking member of FIGS. 5 and 6, which is a side view showing the blocking member in which the blocking plate is moved and thus opened.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

Now, a battery pack according to an embodiment of the present disclosure will be described.

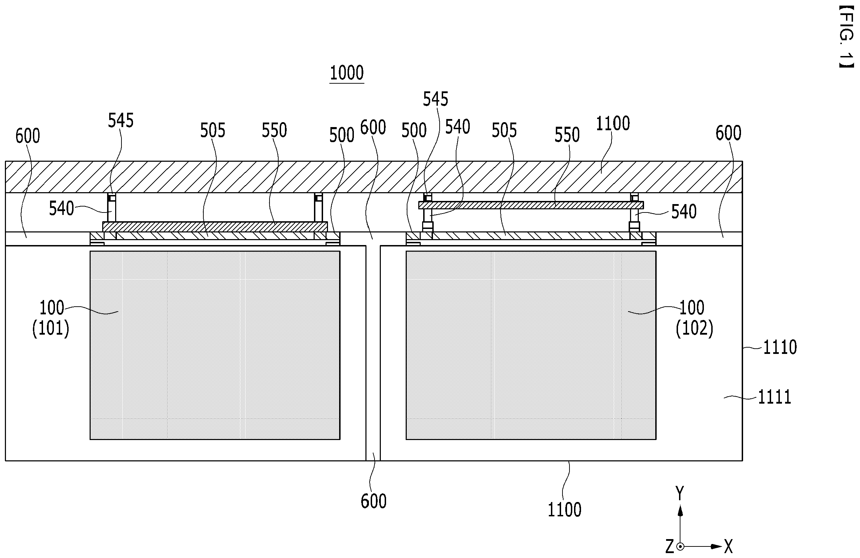

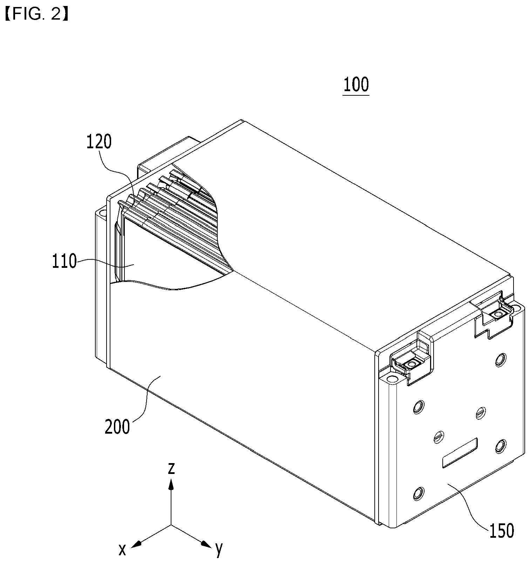

FIG. 1 is a top view of a battery pack according to an embodiment of the present disclosure as viewed from above. FIG. 2 is a perspective view of a battery module included in a battery pack according to an embodiment of the present disclosure as viewed from above.

Referring to FIG. 1, the battery pack 1000 according to an embodiment of the present disclosure includes a plurality of battery modules 100; a pack frame 1100 that houses the battery module 100; and a blocking member 500 located between the battery module 100 and the pack frame 1100.

Referring to FIG. 2, the battery module 100 may include a battery cell stack 120 formed by stacking a plurality of battery cells 110 along a preset direction, and a module frame 200 that houses the battery cell stack 120. In addition, the module frame 200 may have a structure that covers four surfaces corresponding to the upper and lower parts and the left and right surfaces of the battery cell stack 120, and the front and rear surfaces of the battery cell stack may have an open structure. The front and rear surfaces of the battery cell stack 120 opened by the module frame 200 may be covered by the end plate 150. Here, the plurality of battery cells 110 may be a pouch type secondary battery or a prismatic type secondary battery because the type thereof is not particularly limited.

At this time, the battery pack 1000 according to the present embodiment may further include a partition wall 600 located in an inner space of the battery pack 1000 formed by the pack frame 1100, and the battery modules 100, 101 and 102 may be separated from each other through the partition wall 600. Further, the pack frame 1100 shields the upper and lower parts as well as the side surfaces of the battery module 100, and the partition wall 600 may have a structure that shields the side surfaces of the battery module 100 to seal the battery module 100. That is, the battery modules 100, 101 and 102 may be formed to be independent and sealed from each other by the pack frame 1100 and the partition wall 600.

At this time, the pack frame 1100 may include a lower pack housing 1110 and an upper pack housing (not shown) covering the lower pack housing 1110, and a plurality of battery modules 100 may be located on the bottom part 1111 of the lower pack housing 1110. That is, a plurality of battery modules 100 are arranged on the lower pack housing 1110, and the lower pack housing 1110 and the plurality of battery modules 100 may be covered by the upper pack housing. Further, the lower pack housing 1110 has a plurality of module areas, wherein the plurality of module areas may be partitioned by a plurality of partition walls 600 formed within the lower pack housing 1110.

Meanwhile, the partition wall 600 may be formed between the battery modules 100, 101 and 102 adjacent to each other, and may be formed between the blocking members 500 adjacent to each other. At this time, as will be described later, the battery module 100 is sealed by the pack frame 1100 and the partition wall 600, except the case where the blocking member 500 is opened, and a space sealed by the pack frame 1100 and the partition wall 600 may be formed so as to communicate with the outside only by the blocking member 500 opened in the battery module 102 undergoing thermal runaway.

Therefore, when thermal runaway occurs inside the battery pack 1000, the partition wall 600 and the blocking member 500 can prevent venting gas, sparks, and flames generated due to thermal runaway from propagating to peripheral battery modules. At this time, venting gas, sparks, flames, and the like propagate to the battery module adjacent to the battery module undergoing thermal runaway, so that thermal runaway propagation may occur or peripheral battery modules may be damaged. Therefore, the venting gas generated from the battery module 102 undergoing thermal runaway is effectively discharged from the battery module 102 through the partition wall 600 and the blocking member 500 formed inside the battery pack 1000, and the venting gas, flame, and the like can be blocked from propagating to adjacent battery modules, thereby improving safety of the battery pack 1000. In particular, as described above, the partition wall 600 is formed inside the pack frame 1100, so that a venting path can be formed along the partition wall 600, and the venting gas generated from the battery module 102 undergoing thermal runaway through the venting path is effectively discharged to the outside of the battery module 102, and the venting gas and flames can be blocked from propagating to neighboring battery modules 101.

At this time, the battery module 100 includes a battery cell stack 120 in which a plurality of battery cells 110 are stacked; and end plates 150 that cover the open front and rear surfaces of the battery cell stack 120, wherein the blocking member 500 may be located between the pack frame 1100 and the end plate 150.

The blocking member 500 may be coupled to the pack frame 1100 so as to be located between the pack frame 1100 and the end plate 150. The blocking member 500 may be coupled to the pack frame 1100 through a fixing member 540. In one example, the fixing member 540 may be an elastic member or a bolt member.

In this case, the fixing member 540 can be coupled on the pack frame 1100 and at the same time, coupled to the blocking member 500, so that the blocking member 500 can be coupled to the pack frame 1100. Alternatively, the fixing member 540 may allow the blocking member 500 to be coupled to the pack frame 1100 by bolts or the like, but is not limited thereto. In particular, the blocking member 500 includes a plurality of fixing members 540, and one end 545 of the fixing member 540 is coupled to the pack frame 1100 so that the blocking member 500 can be fixed within the battery pack.

The battery modules 100 are arranged in parallel in the inner space of the pack frame 1100, and may be arranged so that the end plates 150 are formed side by side, as shown in FIG. 1. Therefore, the blocking members 500 may be arranged side by side in one direction along the end plate 150. The blocking member 500 discharges the venting gas generated from the battery module 102 undergoing thermal runaway to the outside of the battery module 102, and adjacent battery modules 101 can be shielded to prevent propagation of thermal runaway and damage to adjacent battery modules 101. At this time, the blocking member 500 is formed side by side in one direction along the end plate 150 of the plurality of battery modules 100, thereby forming a venting gas discharge path from the battery module 102 undergoing thermal runaway and also minimizing the influence between the blocking members 500, which can thus effectively protect adjacent battery modules.

Next, a battery pack according to other embodiments of the present disclosure will be described. Since the contents concerning the battery pack includes the same contents described above, only different contents will be described below.

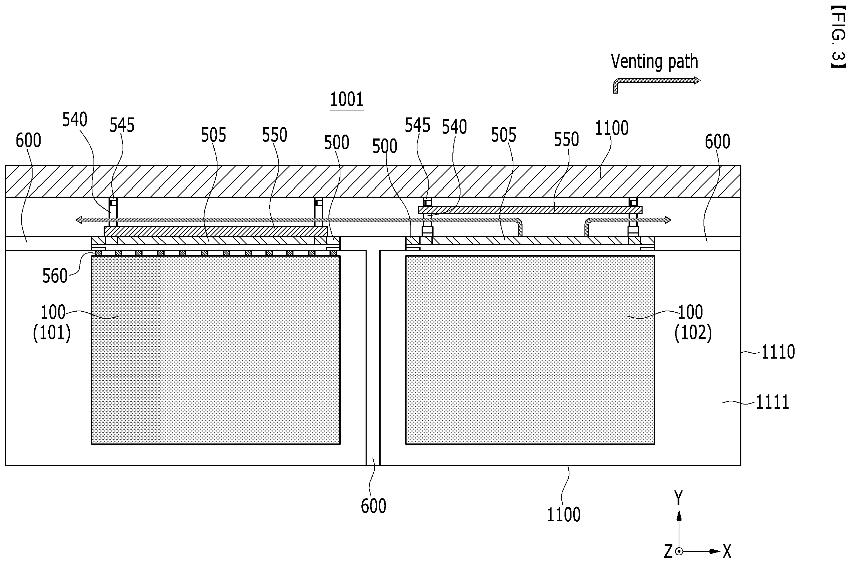

FIG. 3 is a top view of a battery pack according to another embodiment of the present disclosure as viewed from above.

Referring to FIG. 3, the battery pack 1001 according to the present embodiment includes a blocking member 500, the blocking member 500 includes a plurality of protrusions 560, and the protrusion 560 may contact the outside of the end plate 150. At this time, contacting may mean that a part or whole of the protrusion 560 contacts the outside of the end plate 150.

At this time, the end plate 150 is formed adjacent to the pack frame 1100, and the protrusion 560 may be located between the end plate 150 and the pack frame 1100. Further, the blocking member 500 may be fixed on the end plate 150 by the protrusion 560, so that the protrusion 560 can fix the blocking member 500 on the end plate 150.

In particular, according to the battery pack 1001 according to the present embodiment, the blocking member 500 may be formed to be more closely adhered to the end plate 150 of the battery module 100. Therefore, vent gas, flames, sparks, etc. generated from the battery module 102 undergoing thermal runaway can be effectively discharged along the blocking member 500 through the venting path. Further, the adjacent battery module 101 not undergoing thermal runaway is more closely shielded by the blocking member 500, thereby effectively preventing propagation of thermal runaway or damage to adjacent battery modules caused by thermal runaway.

Further, referring to FIG. 3, the venting path formed by the partition wall 600 of the battery pack 1001 according to the present embodiment can be confirmed more specifically. That is, the partition wall 600 is located between the pack frame 1100 and the battery module 100 and between the blocking members 500 adjacent to each other, so that a venting path for venting gas generated from the battery module 102 undergoing thermal runaway can be formed. In particular, neighboring and adjacent battery modules 101 are shielded by the partition wall 600 and the blocking member 500 formed between the pack frame 1100 and the battery module 101, so that venting gas discharged to the outside of the battery module 102 through the blocking member 500 of the battery module 102 undergoing thermal runaway can be effectively discharged without propagating to adjacent battery modules 101.

Next, the blocking member included in the battery pack according to an embodiment of the present disclosure will be described in more detail.

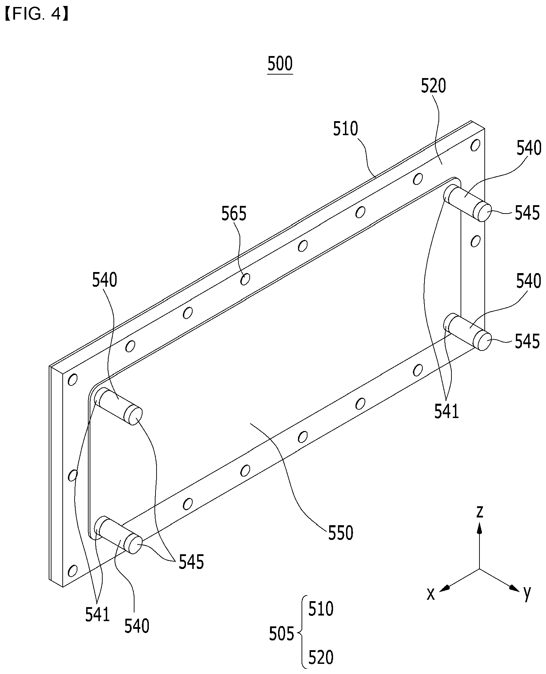

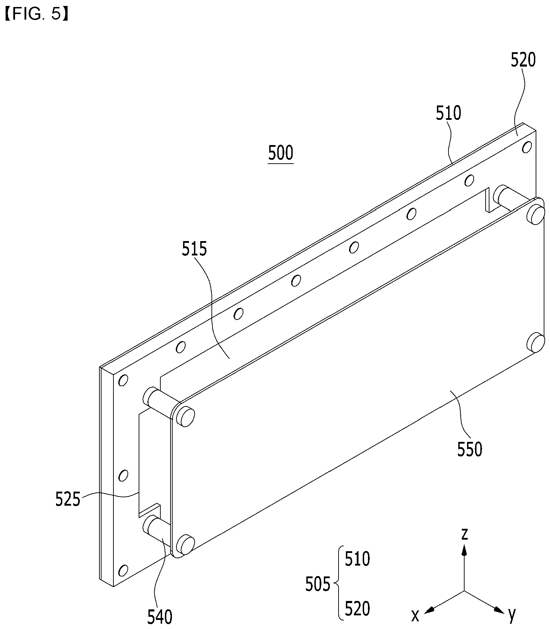

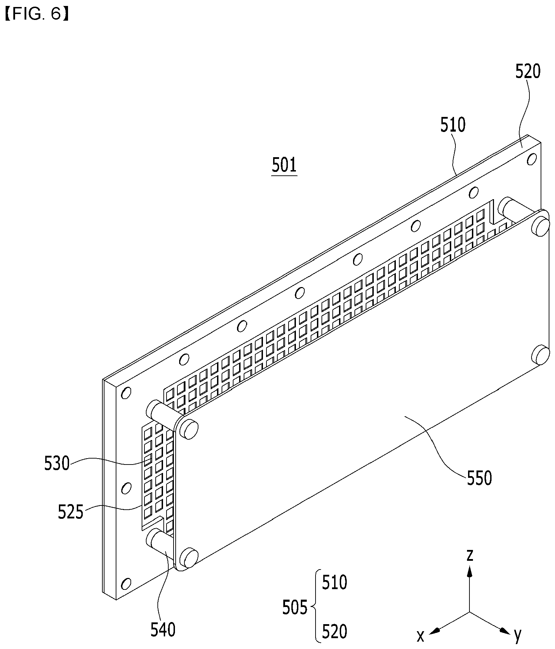

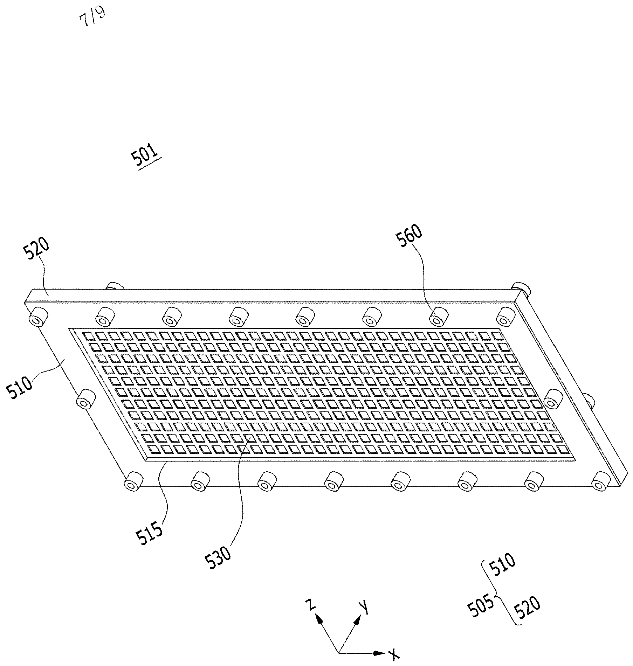

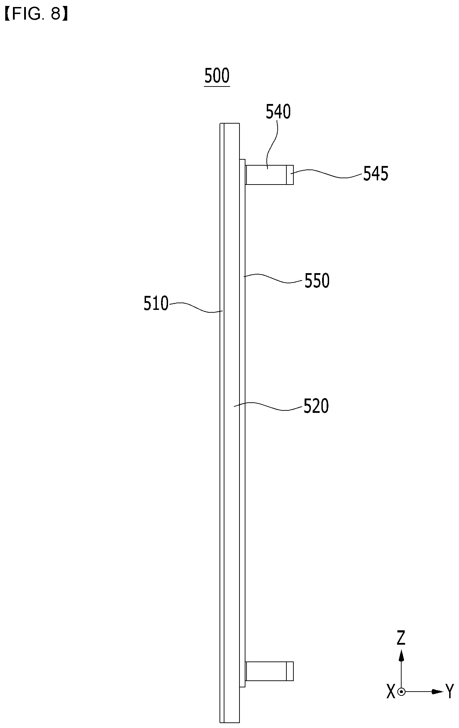

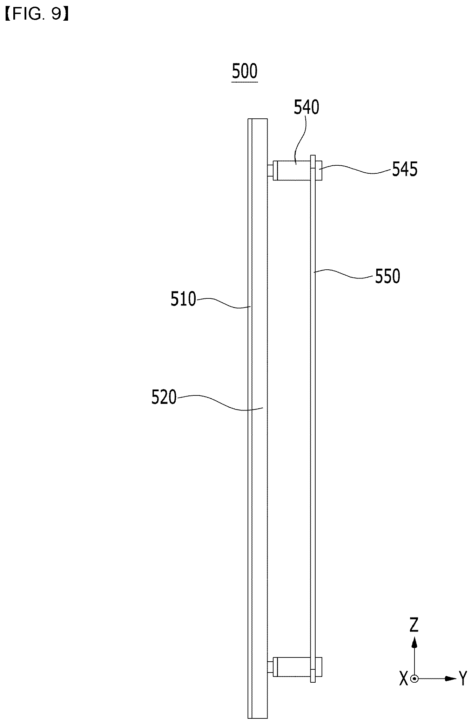

FIG. 4 is a perspective view showing a blocking member included in a battery pack according to an embodiment of the present disclosure. FIG. 5 is a perspective view showing a blocking member in which the blocking plate of FIG. 4 is moved and opened. FIG. 6 is a perspective view showing a blocking member of another embodiment included in a battery pack according to an embodiment of the present disclosure. FIG. 7 is a perspective view of the blocking member of FIG. 6 viewed from another side. FIG. 8 is a side view of the blocking member of FIG. 4, which is a side view showing the blocking member in which the blocking plate is not moved and thus closed. FIG. 9 is a side view of the blocking member of FIGS. 5 and 6, which is a side view showing the blocking member in which the blocking plate is moved and thus opened.

Referring to FIGS. 3 to 7, the blocking members 500 and 501 include a frame member 505 including a first frame 510 and a second frame 520, openings 515 and 525 respectively formed in the first frame 510 and the second frame 520, a fixing member 540 connecting and fixing the frame member 505 and the blocking plate 550, and a blocking plate 550 covering the openings 515 and 525.

The first frame 510 and the second frame 520 may be plates in the form in which the central portions are pierced. In this case, the shapes of the first frame 510 and the second frame 520 may correspond to each other. Here, the regions where the central portions of the first frame 510 and the second frame 520 are opened may be openings 515 and 525.

The frame member 505 may include a plurality of holes 565. The first frame 510 and the second frame 520 may include a plurality of holes 565. The plurality of holes 565 may be formed while penetrating the first frame 510 and the second frame 520. In this case, a coupling member such as a bolt can be inserted into the hole 565, and the coupling member may be inserted while passing through the hole 565, and fixed to the partition wall 600. Therefore, the first frame 510 and the second frame 520 may be coupled and fixed to the partition wall 600 by a coupling member.

The openings 515 and 525 may be formed in frame member 505. The openings 515 and 525 may be formed in the first frame 510 and the second frame 520, respectively. The openings 515 and 525 are usually blocked by the blocking plate 550. However, when the battery module 100 in a high temperature state ignites, the blocking plate 550 can move, and thereby the openings 515 and 525 may be exposed. In this case, venting gas or flame generated in the battery module 100 may move to the outside through the openings 515 and 525.

The fixing member 540 has a structure protruding from the blocking member 500, and may fix the blocking member 500 on the pack frame 1100. Specifically, the fixing member 540 may be a pillar protruding from the frame member 505. More specifically, the fixing member 540 may be a pillar protruding from the second frame 520.

The fixing member 540 includes one end 541 protruding from the frame member 505, and the other end 545 extending perpendicularly from one end 541 in a direction away from the frame member 505 (y-axis direction). Specifically, the fixing member 540 includes one end 541 protruding from the second frame 520, and the other end 545 extending perpendicularly from one end 541 in a direction away from the second frame 520 (y-axis direction). In this case, since the other end 545 is located while being coupled with the pack frame 1100, the blocking member 500 may be fixedly located on the pack frame 1100.

The fixing member 540 may be formed of an elastic member, that is, a spring member. That is, both one end 541 and the other end 545 of the fixing member 540 may be formed of an elastic member. In this case, when venting gas is generated from the battery module 102 undergoing thermal runaway, the fixing member 540 may be compressed by strong pressure within the battery module 102. Specifically, the fixing member 540 may be compressed from one end 541 to the other end 545 of the fixing member 540 located adjacent to the battery modules. Therefore, the blocking plate 550 can be moved by changing the shape of the fixing member 540 .

In summary, the fixing member 540, which is an elastic member, can be compressed by the gas generated from the battery module 102 undergoing thermal runaway, so that the blocking plate 550 can move from one end 541 of the fixing member 540 toward the other end 545 (y-axis direction). Further, as the elastic member is compressed, the blocking plate 550 may move by elasticity of the elastic member.

Further, when the fixing member 540 includes at least one member selected from the group consisting of a spring member and a bolt member, the blocking plate 550 may move by the elastic force of the spring member generated when the spring member is compressed. That is, the blocking plate 550 can move in the direction from one end 541 to the other end 545 of the fixing member 540 due to strong pressure from the venting gas generated from the battery module 102.

The blocking plate 550 may be a plate provided while covering the openings 515 and 525. The size of the blocking plate 550 may be larger than the size of the openings 515 and 525. Therefore, when the battery module 100 is in a normal state, the blocking plate 550 may be located in contact with the second frame 520 and located while covering the openings 515 and 525. However, when the battery module 100 is placed in a high-temperature and high-pressure conditions, for example, thermal runaway phenomenon occurs, the blocking plate 550 may move in a direction from one end 541 to the other end 545 of the fixing member 540. As a result, the openings 515 and 525 are opened so that the venting gas and the flame can move to the outside. In this case, the blocking plate 550 provided at a position corresponding to the adjacent battery module 101 may not move. Therefore, the thermal runaway phenomenon may not be transferred to the adjacent battery module 101, and thus the safety of the battery can be improved. That is, the openings 515 and 525 in the normal-state battery module 101 not undergoing thermal runaway are shielded by the blocking plate 550, so that the inside of the battery pack where the battery module 101 is located can be maintained in a sealed state.

Further, referring to FIGS. 3, 6 and 7, the blocking member 501 according to another embodiment of the present disclosure may include a mesh structure 530 formed on the frame member 505. At this time, the mesh structure 530 may be formed at a position corresponding to the opening 525.

Further, in another embodiment, the blocking member 501 according to the present embodiment includes a mesh structure 530 formed between the first frame 510 and the second frame 520 and located in the opening 525, that is, the mesh structure 530 formed at a position corresponding to the opening 525 and the blocking plate 550 covering the mesh structure 530.

The frame member 505 including the first frame 510 and the second frame 520 may form the body of the blocking member 500. Further, the mesh structure 530 may be formed at a position corresponding to the opening 525, and specifically, it may be formed between the first frame 510 and the second frame 520. Further, the mesh structure 530 is stably fixed by being formed between the first frame 510 and the second frame 520, and the venting gas generated from the battery module 102 undergoing thermal runaway passes through the mesh structure 530, and thus, ignition sources and the like may be primarily filtered to thereby minimize the propagation of thermal runaway and the generation of additional flames. In other words, the first frame 510, the mesh structure 530, and the second frame 520 may be stacked in the stated order, and the mesh structure 530 may be fixed between the first frame 510 and the second frame 520.

At this time, FIGS. 4 and 8 show the blocking member 500 in a shielded state because thermal runaway does not occur in the battery module 100, wherein the first frame 510 and the second frame 520 may include openings 515 and 525, respectively. In addition, the mesh structure 530 may be exposed to the outside of the first frame 510 and the second frame 520 through the openings 515 and 525. Further, the mesh structure 530 exposed to the outside may be covered by the blocking plate 550. That is, the blocking plate 550 may cover the mesh structure 530 exposed through the openings 515 and 525.

Therefore, the blocking member 500 formed adjacent to the battery module 101 not undergoing thermal runaway includes a blocking plate 550 formed to cover the mesh structure 530, wherein the blocking plate 550 may be formed in close contact with the frame member 505. Therefore, even if thermal runaway occurs in neighboring battery modules 100, it is possible to prevent venting gas and flame from entering the battery module 100, thereby preventing occurrence of thermal runaway and preventing damage to the battery module 100.

Referring to FIGS. 5, 6 and 9, the blocking member 500 formed adjacent to the battery module 102 undergoing thermal runaway may move the blocking plate 550 by venting gas generated inside the battery module 102. Specifically, the blocking plate 550 may open and close the openings 515 and 525 while moving in a specific direction. At this time, as will be described later, the specific direction may be a direction in which the fixing member 540 extends. More specifically, the blocking plate 550 may move along the direction in which the fixed member 540 and the elastic member extend. That is, the blocking plate 550 covering the mesh structure 530 may be moved to be spaced apart from the mesh structure 530 and the frame member 505.

At this time, the blocking member 500 may include a plurality of fixing members 540. Specifically, the fixing member 540 may be formed on the frame member 505, and more specifically, it may be formed on the second frame 520. The plurality of fixing members 540 may be formed to be spaced apart from each other, and more specifically, it may be formed at a position adjacent to the mesh structure 530 and the openings 515 and 525. At this time, one end 545 of the fixing member 540 is coupled to the pack frame 1100, thereby forming the blocking member 500 on the pack frame 1100.

Meanwhile, the blocking plate 550 may move along the direction (y-direction) in which the fixing member 540 extends. That is, when a venting gas is generated from the battery module 102 undergoing thermal runaway and thereby the blocking plate 550 moves, the blocking plate 550 may be spaced apart from the mesh structure 530 and the frame member 505 by moving along the direction in which the fixing member 540 extends.

At this time, the fixing member 540 may include an elastic member. More specifically, the fixing member 540 may include an elastic member, wherein the elastic member may include a spring member. That is, the blocking plate 550 may move along the direction (y-direction) in which the elastic member extends, and more specifically, it can move along the direction in which the spring member extends, and the blocking plate 550 is pressed by strong pressure by the venting gas, so that the blocking plate 550 can move along the spring member. At this time, the spring member not only minimizes the possibility of being damaged by strong pressure from the venting gas, but also can support and absorb the movement of the blocking plate 550 that moves rapidly due to the venting gas, thereby effectively allowing the blocking plate 550 to effectively move.

Further, as the blocking plate 550 moves, the mesh structure 530 can be opened or closed to the outside of the battery module. Specifically, before thermal runaway occurs, the mesh structure 530 is covered by the blocking plate 550 so that the battery module is shielded from the outside, or as the blocking plate 550 is away from the mesh structure 530, the battery module can be connected to the outside. Therefore, the venting gas and flame generated from the battery module 102 undergoing thermal runaway may pass through the mesh structure 530 and be discharged onto the venting path inside the battery pack 1000. At this time, some ignition sources and flames are filtered by the mesh structure 530, so that propagation of thermal runaway and generation of additional flames can be minimized.

Meanwhile, the blocking plate 550 may be formed of a material that does not melt even when thermal runaway occurs. In one example, it may be formed of a steel material, but is not limited thereto. In addition, all components of the blocking member 500 may be formed of a material that does not melt even when thermal runaway occurs, and for example, it may be formed of a steel material, but is not limited thereto.

Additionally, referring to FIG. 7, the protrusion 560 may be formed on the blocking plate 550 as mentioned above. The protrusion 560 may contact the outside of the end plate 150. At this time, contacting may mean that a part or whole of the protrusion 560 contacts the outside of the end plate 150.

At this time, the end plate 150 is formed adjacent to the pack frame 1100, and the protrusion 560 may be located between the end plate 150 and the pack frame 1100. Further, the blocking member 500 may be fixed onto the end plate 150 by the protrusion 560, so that the protrusion 560 can fix the blocking member 500 on the end plate 150.

In particular, the blocking member 500 may be formed so as to be more closely adhered to the end plate 150 of the battery module 100 by the protrusion 560. Therefore, venting gas, flames, and sparks generated from the battery module 102 undergoing thermal runaway may be more effectively discharged to the venting path along the blocking member 500. Further, adjacent battery modules 101 not undergoing thermal runaway are more closely shielded by the blocking member 500, thereby effectively preventing propagation of thermal runaway and damage to adjacent battery modules due to thermal runaway.

The battery packs 1000 and 1001 according to the present embodiment include a blocking member 500 formed adjacent to the battery modules 100, 101 and 102, so that venting gas, sparks, and flames generated from the battery module 102 undergoing thermal runaway can be smoothly discharged, and backflow of the venting gas can be prevented. At the same time, the blocking member 500 of the battery module 101 located adjacent to the battery module 102 undergoing thermal runaway is shielded by the blocking plate 550, so that not only the possibility of propagation of venting gases, sparks and flames to adjacent cell modules 101 is minimized, but also the possibility of damage to adjacent cell modules 101 by venting gases, sparks and flames is minimized. Thereby, the safety of the battery packs 1000 and 1001 is improved, and the user can be protected.

In addition, the battery packs 1000 and 1001 of the present disclosure may have a structure in which one or more of the battery modules are gathered, and packed together with a battery management system (BMS) and a cooling device that control and manage battery's temperature, voltage, etc.

Further, the battery packs 1000 and 1001 of the present disclosure can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although the invention has been illustrated and described above with reference to preferred embodiments thereof, the scope of the present disclosure is not limited to specific embodiments described above, and numerous other modifications can be made by those skilled in the art, without departing from the spirit and scope of the principles of the invention described in the appended claims. Further, these modifications should not be understood individually from the technical spirit or perspective of the present disclosure.

### [Description of Reference Numerals]

100: battery module
110: battery cell
120: battery cell stack
150: end plate
200: module frame
500: blocking member
510: first frame
520: second frame
530: mesh structure
540: fixed member
550: blocking plate
560: protrusion(s)
600: partition wall
1000: battery pack
1100: pack frame

## Claims

1. A battery pack comprising:
a plurality of battery modules;
a pack frame that houses the plurality of battery modules;
end plates that cover the open front and rear surfaces of a battery cell stack; and
a blocking member located between the pack frame and the end plate,
wherein the blocking member comprises,
a frame member;
an opening formed in the frame member; and
a blocking plate that covers the opening, and
wherein the blocking plate moves in a specific direction to open and close the opening.

2. The battery pack of claim 1, wherein:
the blocking member further comprises a mesh structure located in the opening, and
the blocking plate covers the mesh structure.

3. The battery pack of claim 1, wherein:
the blocking member further comprises a plurality of fixing members,
wherein the fixing member comprises one end that protrudes from the frame member, and the other end that extends perpendicularly from the one end in a direction away from the frame member.

4. The battery pack of claim 3, wherein:
the other end is located to couple with the pack frame.

5. The battery pack of claim 3, wherein:
the blocking plate moves from one end of the fixing member toward the other end of the fixing member under a certain pressure or higher.

6. The battery pack of claim 3, wherein:
the fixing member comprises an elastic member, and
the blocking plate is movable along a direction in which the elastic member extends.

7. The battery pack of claim 1, wherein:
the plurality of battery modules are arranged in parallel, and
the blocking member is arranged side by side in one direction along the end plates of the plurality of battery modules.

8. The battery pack of claim 1, wherein:
when thermal runaway occurs, the blocking plate moves by the venting gas inside the battery module,
the opening is connected to the outside as the blocking plate moves, and
the venting gas is discharged through the opening.

9. The battery pack of claim 1, wherein:
the blocking member further comprises a plurality of protrusions formed on the frame member.

10. The battery pack of claim 9, wherein:
the protrusion is in contact with the outer side of the end plate.

11. The battery pack of claim 9, wherein:
the protrusion fixes the blocking member on the end plate.

12. The battery pack of claim 1,
further comprising a partition wall located in the inner space of the pack frame,
wherein the partition wall separates the plurality of battery modules from each other.

13. The battery pack of claim 12, wherein:
the pack frame shields the upper and lower parts of the battery module, and
the partition wall shields a side surface of the battery module to seal the battery module.

14. The battery pack of claim 12, wherein:
the frame member includes a plurality of holes, and
a coupling member is inserted into the hole to couple and fix the frame member to the partition wall.

15. A device comprising the battery pack as defined in claim 1.
